# EUROPÄISCHE PATENTSCHRIFT

(11) **EP 0 333 909 B1**
(45) Veröffentlichungstag und Bekanntmachung des Hinweises auf die Patenterteilung: **13.01.1993**
(21) Anmeldenummer: 88107567.5
(22) Anmeldetag: 11.05.1988
(51) Int. Cl.: B65G 15/34

(54) **Dampfundurchlässiges Förderband**
Vapour impermeable conveyor belt
Bande transporteuse imperméable à la vapeur

(30) Priorität: 22.03.1988 DE 3809513
(43) Veröffentlichungstag der Anmeldung: 27.09.1989
(73) Patentinhaber: OLBO Textilwerke GmbH, 42697 Solingen (DE)
(72) Erfinder: Alker, Heinrich, Dipl.-Ing., D-4010 Hilden (DE); Weyers, Hans Josef, D-4040 Neuss (DE); Becker, Hubert, D-5100 Aachen-Brand (DE)
(74) Vertreter: Türk, Gille, Hrabal, Leifert

(56) Entgegenhaltungen:
- AT-B- 231 891
- DE-A- 2 020 400
- DE-A- 3 238 239

## Beschreibung

Die Erfindung betrifft ein dampfundurchlässiges endloses Förderband, das einen textilen Festigkeitsträger und eine Beschichtung aus Gummi oder gummiartigem Material hat.

Endlose Förderbänder dieser Art werden im Dämpfbereich von Dekatiermaschinen zum Behandeln von Gewebebahnen benutzt, wobei das Förderband als äußere Führung eines Umlenkbereiches, in welchem die Stoffbahn mit Dampf und Wärme behandelt wird, dient. Das Förderband muß nicht nur endlos sein, sondern soll auch keine Absätze, die sich auf der behandelten Ware abzeichnen würden, aufweisen. Ebensowenig darf das Förderband sich im praktischen Betrieb spürbar längen.

Bisher für diese Zwecke verwendete dampfundurchlässige endlose Förderbänder sind äußerst kostspielig und trotzdem in der Qualität unbefriedigend, so daß sie Betriebszeiten von maximal zweitausend bis dreitausend Arbeitsstunden erreichen, owbohl eine Mindeststandzeit von fünftausend Arbeitsstunden erwünscht und auch angestrebt ist. Der textile Festigkeitsträger ist ein Gewebe, das auf Papiersiebwebmaschinen in Schußrichtung endlos gewebt, mit Vlies behandelt und dann verstreckt wird, um die Dehnung herauszuziehen. An den Umlenkstellen des Schusses gibt es Verdichtungen der Kettfäden, die zu Abdrücken bei dem Dekatieren von z.B. Wollgeweben führen. Bei derartigen Förderbändern ergeben sich schon nach verhältnismäßig kurzer Betriebszeit Ablöseerscheinungen zwischen dem als Unterlage ausgebildeten Festigkeitsträger-Gewebe und der darauf aufgebrachten Gummischicht, weil die Haftung oder Verklebung zwischen den aus Polyester bestehenden Fäden des Gewebes und dem ausvulkanisierten Gummi ungenügend ist. Das Förderband wird dadurch unbrauchbar und muß ausgetauscht werden.

Es ist bekannt (DE-A-32 28 329), den zugelastischen Festigkeitsträger eines endlosen Förderbandes aus in Längsrichtung verlaufenden synthetischen Garnen oder Seilen zu wickeln, wobei die einzelnen Windungen des Festigkeitsträgers nicht untereinander verwebt, sondern mittels einer vulkanisierten gesinderten oder durch Druck und Hitze veredelten Tränkung oder Beschichtung miteinander verbunden sind.

Der Erfindung liegt die Aufgabe zugrunde, in einfacher und preiswerter Weise ein dehnungsstabiles dampfundurchlässiges endloses Förderband zu schaffen, das im Dämpfbereich von Dekatiermaschinen zum Behandeln von Gewebebahnen benutzt werden kann, wobei dieses Förderband keine Stoßstellen und auch keine Absätze aufweisen soll, sich im praktischen Betrieb nicht spürbar längt und höhere Standzeiten als bisher für vergleichbare Zwecke eingesetzte endlose Förderbänder erreicht.

Diese Aufgabe wird erfindungsgemäß durch ein Förderband gemäß Anspruch 1 gelöst.

Der zu einer endlosen Schicht in der für das Förderband gewünschten Länge in wenigstens einer Lage mit gegenseitigem Kontakt der einzelnen Windungen gewickelte Kabelcordfaden besteht aus Polyester. Der Kabelcordfaden wird vor dem Herstellen der Wicklung ausgerüstet und auf eine vorgegebene Arbeits- und Bruchdehnung vorbehandelt, beispielsweise verstreckt. Die Gummierung oder Beschichtung des aus einem endlos gewickelten Kabelcordfaden gebildeten Festigkeitsträgers kann z. B. aus CR- oder CM-Kautschuk gebildet sein, d. h. aus Polychloropren-Kautschuk oder aus chloriertem Polyethylen-Kautschuk. Schließlich kann die Beschichtung auch z. B. aus hydriertem Nitrilkautschuk (HNBR) gebildet sein. Derartiges Beschichtungsmaterial geht mit den Kabelcordfäden eine chemische Bindung ein, so daß keine Ablöseerscheinungen zwischen Festigkeitsträger und Gummierung wie bei bekannten Förderbändern, bei denen als Festigkeitsträger ein textiles Gewebe benutzt wird, auftreten.

Da die Kabelcordfäden vor dem endlosen Wickeln zu einem keine Schußfäden aufweisenden Festigkeitsträger ausgerüstet und auf vorgegebene Arbeits- und Bruchdehnung vorbehandelt worden sind, ist eine Streckbehandlung des fertig gewickelten Festigkeitsträgers nicht erforderlich. Vielmehr kann nach Fertigstellung der Wicklung des Festigkeitsträgers dieser unmittelbar mit der Gummierung bzw. Gummibeschichtung versehen werden, wodurch das Förderband fertiggestellt wird. Da der Festigkeitsträger aus einem endlos gewickelten Cordfaden besteht, weist er keine Stoßstellen oder Verbindungsstellen auf, die durch das aufgebrachte Gummimaterial nur notdürftig und unvollständig kaschiert werden könnten.

Das Förderband der vorliegenden Erfindung wird in Dekatiermaschinen bzw. in Maschinen zum Verdichten von Oberbekleidungsstoffen verwendet. Es ist für Wasserdampf undurchlässig, so daß der für die Verdichtungsbehandlung in den Oberbekleidungsstoff eingeleitete Dampf in diesem für die gewünschte Behandlungszeit bleibt und nicht aus ihm herausgesaugt wird. Nach Abschluß der Verdichtungsbehandlung wird der Wasserdampf aus dem so behandelten Stoff abgesaugt.

Das erfindungsgemäße Förderband ist einerseits preiswert herzustellen, weil die Ausrüstung des Festigkeitsträgers vor dem Wickeln des Kabelcordfadens zur Festigkeitsträgerschicht am Cordfaden vorgenommen werden kann. Nach dem Wickeln der Festigkeitsträgerschicht braucht nur noch die Gummischicht aufgebracht zu werden. Da sich eine chemische Bindung zwischen der eingesetzten Kautschuktype der Gummischicht und dem Polyester der Kabelcordfäden einstellt, zeigen sich auch nach längeren Betriebszeiten keine Ablöseerscheinungen zwischen Festigkeitsträger und der äußeren Gummischicht. Daher hat das erfindungsgemäße Förderband höhere Standzeiten als für gleiche Zwecke eingesetzte bekannte Förderbänder und erreicht somit eine wesentlich höhere Anzahl von Betriebsstunden.

In der Zeichnung ist ein Ausführungsbeispiel eines erfindungsgemäßen dampfundurchlässigen endlosen Förderbandes schematisch dargestellt, und zwar zeigt
- Fig. 1: eine schaubildliche Ansicht dieses Förderbandes und
- Fig. 2: einen Querschnitt des Förderbandes nach Linie II - II aus Fig. 1 in vergrößertem Maßstab.

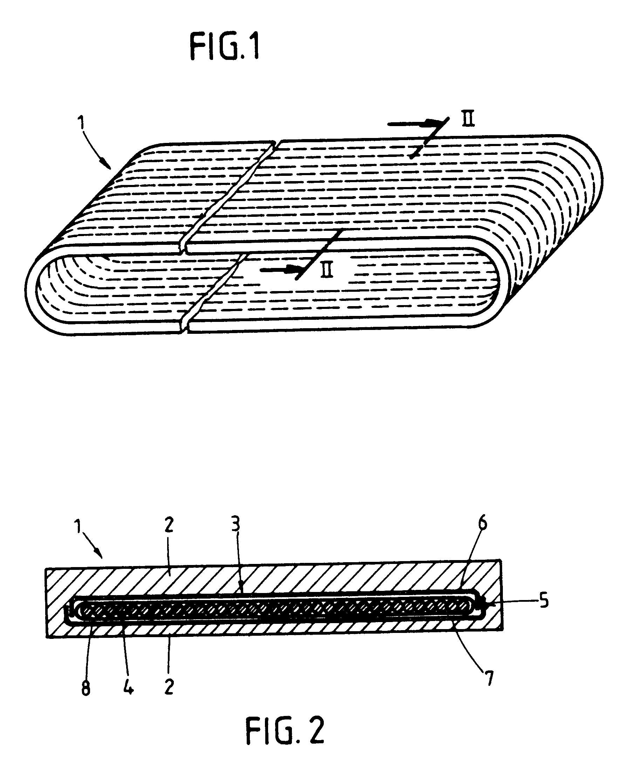

Das endlos in einem Stück gefertigte Förderband (1) enthält in eine Gummischicht (2) eingebettet einen einschichtigen textilen Festigkeitsträger (3), der aus einem Kabelcordfaden (4) entsprechend der Länge des endlosen Förderbandes (1) gewickelt ist. Die Wicklung des Kabelcordfadens (4) erfolgt derart, daß die einzelnen endlosen Windungen in einer Ebene nebeneinander liegen und sich praktisch gegenseitig berühren, wie Fig. 2 zeigt. Die sich in Längsrichtung des Förderbandes wie Kettfäden eines Gewebes erstreckenden Windungen des Kabelcordfadens (4) werden jedoch nicht durch Schußfäden in Querrichtung zusammengehalten. Zur Querarmierung ist ein Breaker (5) in Form von zwei vorher ausgerüsteten Nylongeweben (6) und (7) um die Wicklung des Kabelcordfadens (4) gelegt. Zwischen dem Kabelcordfaden (4) und den Nylongeweben (6) und (7) befindet sich eine Skimm-Schicht (8), die aus den genannten Kautschuktypen vulkanisiert ist.

Während der zu dem endlosen Festigkeitsträger gewickelte Kabelcordfaden (4) aus Polyester besteht, ist die den Festigkeitsträger umschließende Gummischicht (2) und auch die Skimm-Schicht (8) aus Material gebildet, das mit dem Material des Kabelcordfadens (4) eine chemische Bindung eingeht. Die Gummischicht kann dabei z. B. aus Brombutyl/CR-Kautschuk, hydriertem Nitrilkautschuk oder auch aus CM-Kautschuk bestehen. Wichtig ist, daß das Material der Gummischicht (2) und der Skimm-Schicht (8) mit dem Material des Kabelcordfadens (4) und auch des Breakers (5) eine chemische Bindung eingeht, um Ablösungserscheinungen des Festigkeitsträgers vom Gummimaterial zu verhindern.

Da der Festigkeitsträger (3) aus einem endlos gewickelten Cordfaden (4) gebildet ist, ergeben sich innerhalb des endlosen Förderbandes (1) keine Stoßstellen des Festigkeitsträgers. Anfang und Ende des endlos gewickelten Cordfadens (4) bilden keine spürbaren Absätze im Festigkeitsträger.

Der Festigkeitsträger geht beim Vulkanisieren der Kautschuk-Beschichtung zur Gummischicht (2) und zur Skimm-Schicht (8) mit dem Kautschuk bzw. Gummi eine dauerhafte chemische Bindung ein, die auch noch nach langen Betriebszeiten stabil ist.

## Patentansprüche

1. Dampfundurchlässiges endloses Förderband (1) mit einem textilen Festigskeitsträger (3), der aus wenigstens einem endlos in wenigstens einer Lage gewickelten Kabelcordfaden (4) aus Polyester mit vorgegebener Arbeits- und Bruchdehnung besteht, und mit einer Beschichtung (2) aus Gummi oder gummiartigem Material, in welchem die Wicklung eingebettet ist, wobei das Material der Beschichtung mit dem Material des Kabelcordfadens eine dauerhafte chemische Bindung eingeht und aus vulkanisiertem hydrierten Nitrilkautschuk, aus vulkanisiertem Brombutyl/Chloropren (BIIR(CR) oder aus vulkanisiertem chlorierten Polyester (CM), Kautschuk oder anderen hitzebeständigen dampfundurchlässigen vernetzbaren Plastomeren oder Elastormeren, die eine dauerhafte chemische Bindung mit dem Material des Kabelcordfadens (4) eingehen, besteht und wobei das Förderband in Dekatiermaschinen, bzw. Maschinen zur Verdichtung von Oberbekleidungsstoffen verwendet wird.

2. Förderband nach Anspruch 1, dadurch gekennzeichnet, daß die einzelnen Windungen des gewickelten Kabelcordfadens (4) in gegenseitigem Kontakt miteinander stehen.

3. Förderband nach Anspruch 1 oder 2, dadurch gekennzeichneet, daß zur Querarmierung des Festigkeitsträgers (3) ein Breaker (5) aus zuvor ausgerüstetem dichten Nylongewebe (6,7) in das Gummimaterial (2,8) eingebettet ist, und zwischen diesem Breaker und dem Festigkeitsträger eine Skimm-Schicht (8) angeordnet ist, die sowohl mit dem Material des Kabelcordfadens (4) als auch mit dem Material des Breakers (5) eine dauerhafte chemische Bindung eingeht.

## Claims

1. Steam-impermeable, endless conveyor belt (1) with a textile strength carrier (3), which comprises at least one endless polyester cable cord thread (4) wound in at least one layer and having a predetermined working elongation and elongation at break and with a coating (2) of rubber or rubbery material, in which the winding is embedded, the material of the coating forming a permanent chemical bond with the material of the cable cord thread and comprises vulcanized, hydrogenated nitrile rubber, vulcanized bromobutyl/chloroprene (BIIR(CR) or vulcanized chlorinated polyester (CM), rubber or other heat-resistant, steam-impermeable, crosslinkable plastomers or elastomers, which form a permanent chemical bond with the material of the cable cord thread (4) and in which the conveyor belt is used in decatizing machines or machines for the compression of outer garment material.

2. Conveyor belt according to claim 1, characterized in that the individual turns of the wound cable cord thread (4) are in reciprocal contact.

3. Conveyor belt according to claims 1 or 2, characterized in that for the transverse reinforcement of the strength carrier (3) a breaker (5) formed from previously finished, dense Nylon fabric (6, 7) is embedded in the rubber material (2, 8) and a skim coating (8) is placed between said breaker and the strength carrier and forms a permanent chemical bond both with the material of the cable cord thread (4) and with the material of the breaker (5).

## Revendications

1. Bande transporteuse (1) sans fin, imperméable à la vapeur, comportant un support textile (3) conférant la résistance, constitué d'au moins un fil câblé (4) en polyester présentant un allongement de travail et de rupture prédéterminé, qui est enroulé sans fin en au moins une couche, ainsi qu'un revêtement (2) en caoutchouc ou matériau caoutchouteux, dans lequel est noyé l'enroulement, le matériau du revêtement établissant avec avec le matériau du fil câblé une liaison chimique durable et étant formé de caoutchouc nitrile hydrogéné vulcanisé, de bromobutyle/chloroprène vulcanisé (BIIR/CR) ou de polyester chloré vulcanisé (CM), ou d'autres plastomères ou élastomères réticulables, résistants à la chaleur et imperméables à la vapeur, qui établissent une liaison chimique durable avec le matériau du fil câblé (4), la bande transporteuse étant utilisée dans des machines à décatir ou des machines pour comprimer des étoffes pour vêtements de dessus.

2. Bande transporteuse selon la revendication 1, caractérisée en ce que les différentes spires du fil câblé (4) enroulé sont en contact entre elles.

3. Bande transporteuse selon la revendication 1 ou 2, caractérisée en ce que, pour l'armure transversale du support (3) conférant la résistance, une ceinture (5) faite de tissu Nylon (6, 7) dense, préalablement apprêté, est noyée dans le matériau caoutchouteux (2, 8), et qu'une couche d'enrobage (8) est disposée entre cette ceinture et le support (3), couche d'enrobage qui établit une liaison chimique durable à la fois avec le matériau du fil câblé (4) et avec le matériau de la ceinture (5).
